# FASCICULE DE BREVET EUROPEEN

(11) **EP 3 996 954 B1**
(45) Date de publication et mention de la délivrance du brevet: **30.08.2023**
(21) Numéro de dépôt: 20750700.5
(22) Date de dépôt: 08.07.2020
(51) Int. Cl.: B60R 13/02, B60J 5/04, B60R 13/04

(54) **DISPOSITIF DE FIXATION D'UN ENJOLIVEUR DE BORD LATÉRAL DE CADRE DE PORTE DE VÉHICULE AUTOMOBILE**
VORRICHTUNG ZUR BEFESTIGUNG EINES SEITLICHEN RANDPROFILTEILS EINER KRAFTFAHRZEUGTÜR
DEVICE FOR FASTENING A MOTOR VEHICLE DOOR FRAME LATERAL EDGE TRIM PIECE

(30) Priorité: 11.07.2019 FR 1907779
(43) Date de publication de la demande: 18.05.2022
(73) Titulaire: PSA Automobiles SA, 78300 Poissy (FR)
(72) Inventeur: JAOUEN, Jean Sebastien, 91160 LONGJUMEAU (FR); GRUNCHEC, Gregory, 92130 ISSY LES MOULINEAUX (FR); GUILLY, Xavier, 91620 NOZAY (FR); TIROLE, Sebastien, 90140 FROIDEFONTAINE (FR)
(86) Numéro de dépôt international: PCT/FR2020/051210
(87) Numéro de publication internationale: WO 2021/005303

(56) Documents cités:
- CN-A- 109 649 130
- DE-A1-102010 056 384
- DE-A1-102013 010 125
- DE-A1-102015 004 982
- DE-A1-102017 000 276
- DE-A1-102017 114 038
- US-B1- 9 114 765

## Description

Le contexte technique de la présente invention est celui des finitions de portes de véhicule automobile. Plus particulièrement, l'invention a trait aux coulisses de cadres de porte de véhicule automobile et aux enjoliveurs de bords latéraux de tels cadres de porte.

La publication DE 10 2017 114038 A1 divulgue un dispositif de fixation d'un enjoliveur d'après le préambule de la revendication 1.

Dans l'état de la technique, on connait des coulisses de cadres de portes qui sont engagées le long d'une partie supérieure d'un cadre de porte, au dessus des vitres. Lors de leur montage, les coulisses de cadre de porte avant et les coulisses de cadre de porte arrière, d'un même côté, sont adjacentes et doivent être alignées l'une par rapport à l'autre. Elles doivent également être alignées par rapport à chaque enjoliveur sur le bord latéral du cadre de porte correspondant. Cependant, lorsqu'une vitre est déplacée vers le haut, celle-ci arrive en butée en fond de coulisse de cadre de porte et peut provoquer un basculement de la coulisse de cadre de porte et de l'enjoliveur de bord latéral qui lui est associé, ce qui impacte négativement l'esthétique du véhicule automobile.

On connait le document FR3049510 A1 qui divulgue une coulisse de cadre de porte de véhicule automobile, la coulisse comprenant une pièce de liaison destinée à coopérer avec l'enjoliveur via un orifice de fixation logé sur ladite pièce de liaison. La pièce de liaison permet de fixer la coulisse de cadre de porte à l'enjoliveur de sorte à absorber l'effort de poussée sur le fond de coulisse induit par la vitre lorsque cette dernière est déplacée vers le haut. La pièce de liaison répond ainsi à la problématique du basculement de la coulisse de cadre de porte et de l'enjoliveur lors du levage de vitre.

L'assemblage de l'enjoliveur sur le cadre de porte nécessite la fixation de l'enjoliveur sur la coulisse de cadre de porte, par l'intermédiaire de la pièce de liaison. Cette fixation est obtenue par une force exercée depuis l'enjoliveur vers la pièce de liaison, de sorte à fixer l'enjoliveur de cadre de porte au niveau de l'orifice de fixation de la pièce de liaison. Cette force peut aussi provoquer un basculement de la pièce de liaison en direction d'un fond de la coulisse de cadre de porte, nuisant ainsi à l'efficacité de cette dernière et modifiant le positionnement de la coulisse de cadre de porte qui lui est associée. Dès lors, l'alignement entre l'enjoliveur et le cadre de porte n'est plus assuré.

La présente invention a pour objet de proposer un nouveau dispositif de fixation d'un enjoliveur de bord latéral de cadre de porte de véhicule automobile afin de répondre au moins en grande partie aux problèmes précédents et de conduire en outre à d'autres avantages.

Un autre but de l'invention est de proposer un dispositif de fixation d'un enjoliveur de bord de cadre de porte simple et économique, tant du point de vue de sa mise en oeuvre que du point de vue de sa fabrication.

Un autre but de l'invention est de proposer un dispositif de fixation d'un enjoliveur de bord de cadre de porte universel et polyvalent, pouvant s'adapter à tout type de cadre de porte.

Selon un premier aspect de l'invention, on atteint au moins l'un des objectifs précités avec un dispositif de fixation d'un enjoliveur de bord latéral de cadre de porte de véhicule automobile, le dispositif de fixation comprenant (i) une pièce de liaison destinée à collaborer avec l'enjoliveur de bord latéral, la pièce de liaison comprenant, du côté d'une face d'appui avec l'enjoliveur de bord latéral, une ouverture de fixation dudit enjoliveur de bord latéral et des moyens de fixation destinés à permettre la fixation du dispositif de fixation sur une coulisse de cadre de porte, et (ii) un organe anti-rotation solidaire de la pièce de liaison et situé au niveau d'une face arrière située à l'opposé de la face d'appui, l'organe anti-rotation s'étendant en saillie par rapport à la face arrière de ladite pièce de liaison.

Le dispositif de fixation conforme au premier aspect de l'invention permet, grâce à l'organe anti-rotation, de bloquer la rotation de la pièce de liaison lors de l'assemblage de l'enjoliveur de bord latéral sur ledit dispositif de fixation.

La face d'appui de la pièce de liaison est destinée à être orientée vers l'extérieur du véhicule automobile, côté enjoliveur de bord latéral ; et la face arrière de la pièce de liaison est destinée à être orientée à l'opposé, vers l'intérieur du véhicule automobile et vers un cadre de porte.

La face d'appui de la pièce de liaison est destinée à collaborer d'une part avec l'enjoliveur de bord latéral, via l'ouverture de fixation de la pièce de liaison, et d'autre part avec la coulisse de cadre de porte, via les moyens de fixation de la pièce de liaison. L'ouverture de fixation de la pièce de liaison permet de fixer solidairement la pièce de liaison et l'enjoliveur de bord latéral, par exemple par collaboration de formes complémentaires. L'enjoliveur de bord latéral est appuyé contre la face d'appui lors de sa fixation avec l'ouverture de fixation de la pièce de liaison.

La face arrière de la pièce de liaison est liée solidairement à l'organe anti-rotation.

L'organe anti-rotation est destiné à collaborer avec le cadre de porte lors de la fixation de l'enjoliveur de bord latéral sur l'ouverture de fixation de la pièce de liaison. En collaborant avec le cadre de porte, l'organe anti-rotation permet de s'opposer à la force exercée sur la face d'appui par l'enjoliveur de bord latéral lors de son assemblage sur la coulisse de cadre de porte, par l'intermédiaire de la pièce de liaison.

Ainsi, l'organe anti-rotation forme une butée limitant le basculement vers l'arrière de la pièce de liaison lors de l'assemblage de l'enjoliveur de bord latéral sur la pièce de liaison, relativement à la coulisse de cadre de porte. Autrement dit, l'organe anti-rotation limite le basculement de la pièce de liaison en direction d'une face arrière de la coulisse de cadre de porte, c'est-à-dire située du côté d'un habitacle du véhicule automobile.

De plus, le dispositif de fixation conforme au premier aspect de l'invention permet, grâce à la pièce de liaison, de mettre en référence la coulisse de cadre de porte contre le bord latéral du cadre de porte en constituant une liaison robuste avec l'enjoliveur de bord latéral, la pièce de liaison étant configurée pour absorber un effort de poussée sur la coulisse de cadre de porte induit par la vitre lorsque cette dernière est déplacée vers le haut.

Les moyens de fixation destinés à permettre la fixation du dispositif de fixation conforme au premier aspect de l'invention sur une coulisse de cadre de porte sont des moyens de fixation amovibles, le dispositif de fixation conforme au premier aspect de l'invention et la coulisse de cadre de porte pouvant être détachés l'un l'autre et/ou rattachés l'un l'autre. De façon non limitative, un exemple de moyen de fixation détachable est par vissage.

L'organe anti-rotation est rapporté sur la pièce de liaison. L'organe anti-rotation et la pièce de liaison sont issus de matière, en ce sens qu'ils constituent un seul et même ensemble monobloc, indissociable sans que ne soit porté atteinte à l'intégrité de l'un et/ou l'autre des constituants dudit ensemble monobloc ; l'organe anti-rotation est surmoulé sur la pièce de liaison. L'organe anti-rotation est rapporté sur la pièce de liaison lors d'une opération de surmoulage.

Le dispositif de fixation conforme au premier aspect de l'invention comprend avantageusement au moins un des perfectionnements ci-dessous, les caractéristiques techniques formant ces perfectionnements pouvant être prises seules ou en combinaison :
- la pièce de liaison comprend, au niveau de sa face arrière, au moins une nervure qui s'étend en saillie par rapport à ladite face arrière. La nervure contribue à rigidifier la pièce de liaison de sorte à éviter que cette dernière ne fléchisse lors de la fixation de l'enjoliveur de bord latéral sur le dispositif de fixation selon l'invention ;
- l'au moins une nervure s'étend longitudinalement entre une face supérieure de la pièce de liaison et l'ouverture de fixation. La face supérieure de la pièce de liaison relie la face d'appui de la pièce de liaison et la face arrière de la pièce de liaison. Lorsque le dispositif de fixation confirme au premier aspect de l'invention est mis en oeuvre, la face supérieure de la pièce de liaison est située du côté de la coulisse de cadre de porte. Une telle disposition des nervures permet de limiter efficacement un couple produit par la force appliquée lors de l'assemblage de l'enjoliveur de cadre de porte sur le dispositif de fixation conforme au premier aspect de l'invention ;
- de manière avantageuse, la pièce de liaison comprend deux nervures parallèles et distantes l'une de l'autre. La présence de deux nervures ainsi disposées améliore la rigidification de la pièce de liaison ;
- les nervures sont centrées latéralement par rapport à la pièce de liaison. Une telle répartition des nervures permet d'assurer une meilleure rigidité et une meilleure tenue de la pièce de liaison lors de son assemblage sur la coulisse de cadre de porte et /ou lors de la fixation de l'enjoliveur de bord latéral ;
- les nervures sont préférentiellement issues de matière avec la pièce de liaison. Par issue de matière, on entend que les nervures et la pièce de liaison forment un ensemble monobloc et ne peuvent être dissociées les unes des autres sans que ne soit portée atteinte à l'intégrité de l'une et/ou l'autre des nervure et/ou de la pièce de liaison. Par exemple, les nervures sont obtenues lors du moulage de la pièce de liaison ;
- l'organe anti-rotation est situé dans une position intermédiaire entre l'ouverture de fixation et une face supérieure de la pièce de liaison. En ce sens, l'organe anti-rotation ne s'étend pas en saillie au-delà de la face supérieure de la pièce de liaison. Cette configuration avantageuse permet de limiter un basculement du dispositif de fixation conforme au premier aspect de l'invention lors de la fixation de l'enjoliveur de bord latéral.
- l'au moins une nervure est logée dans l'organe anti-rotation lorsque ledit organe anti-rotation est monté sur la pièce de liaison. En ce sens, la nervure logée formée sur la pièce de liaison participe à l'assemblage et au maintien de la pièce de liaison et l'organe anti-rotation ;
- la pièce de liaison a une forme générale trapézoïdale et/ou l'ouverture de fixation a une forme trapézoïdale ;
- l'ouverture de fixation est traversante entre la face d'appui et la face arrière de la pièce de liaison ;
- la pièce de liaison est formée d'un matériau plastique rigide et l'organe anti-rotation est formé d'un élastomère. D'une manière générale, l'organe anti-rotation est formé d'un matériau présentant une plus grande élasticité que le matériau formant la pièce de liaison. L'élasticité de l'organe anti-rotation lui permet de pouvoir être comprimé entre la pièce de liaison et la coulisse de cadre de porte lors de la fixation de l'enjoliveur de bord latéral. La rigidité de la pièce de liaison facilite quant à elle la fixation de l'enjoliveur de bord latéral dans l'ouverture de fixation de la pièce de liaison.

Selon un deuxième aspect de l'invention, il est proposé une coulisse de cadre de porte de véhicule automobile, la coulisse de cadre de porte comportant un corps longitudinal configuré pour être monté le long du cadre de porte et un dispositif de fixation conforme au premier aspect de l'invention, le dispositif de fixation étant fixé solidairement sur le corps longitudinal de la coulisse de cadre de porte.

La fixation solidaire du dispositif de fixation selon le premier aspect de l'invention avec le corps longitudinal de la coulisse de cadre de porte est par exemple une fixation amovible, le dispositif de fixation conforme au premier aspect de l'invention et la coulisse de cadre de porte pouvant être détachés l'un l'autre et/ou rattachés l'un l'autre. De façon non limitative, un exemple de fixation amovible est par vissage.

Le corps longitudinal de la coulisse de cadre de porte est configuré pour définir un encadrement fixe le long du cadre de porte où il est fixé, de sorte à guider les déplacements de la vitre montée sur ledit cadre de porte.

La coulisse de cadre de porte conforme au deuxième aspect de l'invention comprend avantageusement au moins un des perfectionnements ci-dessous, les caractéristiques techniques formant ces perfectionnements pouvant être prises seules ou en combinaison :
- l'organe anti-rotation du dispositif de fixation s'étend en direction du cadre de porte, de sorte qu'il réside un jeu fonctionnel non nul entre l'organe anti-rotation et le cadre de porte. Le jeu fonctionnel est évalué en l'absence de l'enjoliveur de bord latéral monté sur le dispositif de fixation décrit précédemment. Le jeu fonctionnel est inférieur à 0,5 mm ; typiquement il est de l'ordre de 0,2 microns.

Selon un troisième aspect de l'invention, il est proposé un véhicule automobile comprenant (i) au moins une porte latérale logée dans un cadre de porte, (ii) une coulisse de cadre de porte conforme au deuxième aspect de l'invention et située le long d'un bord supérieur du cadre de porte, (iii) un enjoliveur situé le long d'un bord latéral du cadre de porte et fixé solidairement à la coulisse de cadre de porte par l'intermédiaire de son dispositif de fixation.

Le dispositif de fixation conforme au premier aspect de l'invention s'étend entre l'enjoliveur de bord latéral et le cadre de porte. Dans le véhicule automobile conforme au troisième aspect de l'invention, l'organe anti-rotation du dispositif de fixation permet de bloquer le basculement dudit dispositif de fixation lors de la fixation de l'enjoliveur de bord latéral sur la pièce de liaison. En d'autres termes, en présence de l'organe anti-rotation, le basculement du dispositif de fixation, lors de l'assemblage de l'enjoliveur de bord latéral, depuis l'enjoliveur de bord latéral vers le cadre de porte est réduit voire empêché par rapport à un dispositif de fixation dépourvu de l'organe anti-rotation. En d'autres termes encore, le basculement du dispositif de fixation, lors de l'assemblage de l'enjoliveur de bord latéral, depuis la face d'appui de la pièce de liaison du dispositif de fixation vers la face arrière de ladite pièce de liaison, est au moins partiellement bloqué par rapport à un dispositif de fixation dépourvu de l'organe anti-rotation.

Lorsque l'enjoliveur de bord latéral est monté sur la coulisse de cadre de porte, l'organe anti-rotation est déformé, et notamment comprimé contre le cadre de porte et/ou une face arrière de la coulisse de cadre de porte, empêchant ainsi à la pièce de liaison du dispositif de fixation de basculer en direction dudit cadre de porte. Bien entendu, cette déformation est élastique : lorsque l'enjoliveur de bord latéral est démonté de sa coulisse de cadre de porte, l'organe anti-rotation reprend sa configuration normale dans laquelle il demeure un jeu non nul entre lui-même et le cadre de porte, comme évoqué précédemment.

Le dispositif de fixation conforme au premier aspect de l'invention permet de fixer l'enjoliveur de bord latéral grâce à l'ouverture de fixation de la pièce de liaison. L'enjoliveur de bord latéral comprend des moyens de fixation collaborant avec l'ouverture de fixation de la pièce de liaison du dispositif de fixation conforme au premier aspect de l'invention. Par exemple, l'ouverture de fixation de la pièce de liaison et les moyens de fixation collaborent par leurs formes complémentaires. Les moyens de fixation de l'enjoliveur de bord latéral sont situés au niveau d'une face arrière de l'enjoliveur de bord latéral opposée à une face avant de l'enjoliveur de bord latéral qui est celle destinée à être visible sur le véhicule automobile.

Le dispositif de fixation conforme au premier aspect de l'invention est fixé à la coulisse de cadre de porte, elle même fixée au cadre de porte, grâce aux moyens de fixation de la pièce de liaison. Les moyens de fixation de la pièce de liaison coopèrent avec la coulisse de cadre de porte par exemple par la collaboration de leurs formes complémentaires.

Dans le véhicule automobile conforme au troisième aspect de l'invention, le corps longitudinal de la coulisse de cadre de porte défini un encadrement fixe le long du cadre de porte où il est fixé, de sorte à guider les déplacements de la vitre destinée à être montée sur ledit cadre de porte.

L'enjoliveur de bord latéral forme une plaque qui s'étend au moins en partie le long du bord latéral du cadre de porte. Ainsi, lorsque l'enjoliveur de bord latéral, qui a une vocation notamment esthétique, est positionné sur le véhicule automobile conforme au troisième aspect de l'invention, alors le dispositif de fixation conforme au premier aspect de l'invention est masqué.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique d'un véhicule conforme au troisième aspect de l'invention, comprenant un cadre de porte équipé d'un dispositif de fixation conforme au premier aspect de l'invention ;
[Fig.2] illustre une vue schématique du dispositif de fixation conforme au premier aspect de l'invention présenté en FIGURE 1, vu depuis l'extérieur du véhicule automobile ;
[Fig.3] illustre une vue schématique du dispositif de fixation conforme au premier aspect de l'invention présenté en FIGURE 1, vu depuis l'intérieur du véhicule automobile ;
[Fig.4] illustre une coupe longitudinale du dispositif de fixation conforme au premier aspect de l'invention présenté en FIGURE 3 ;
[Fig.5] illustre une vue schématique d'une pièce de liaison isolée du dispositif de fixation conforme au premier aspect de l'invention présenté en FIGURE 4, vu depuis l'extérieur du véhicule automobile.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

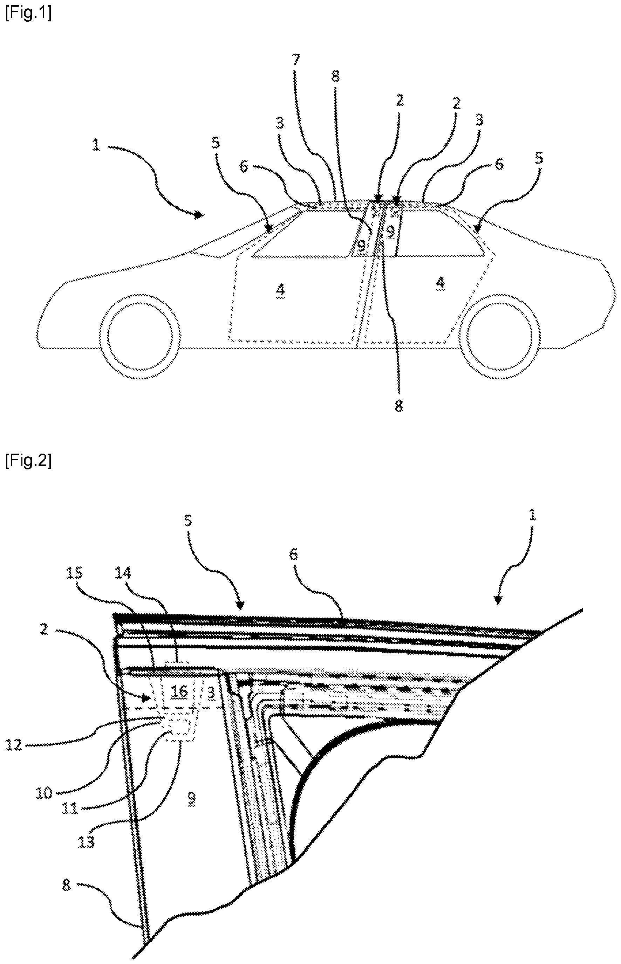

La FIGURE 1 illustre un véhicule automobile 1 équipé de dispositifs de fixation 2 conformes au premier aspect de l'invention et logés dans des coulisses de cadre de porte 3 conformes au deuxième aspect de l'invention. Dans la suite de la description, les dénominations « supérieur », « inférieur », « avant », « arrière » sont appréciées par rapport au positionnement de l'élément ainsi qualifié au sein du véhicule automobile 1.

Le véhicule automobile 1 comprend sur au moins un de ses côtés deux portes latérales 4, une porte latérale 4 avant et une porte latérale 4 arrière, chacune logée dans un cadre de porte 5 schématisé par des pointillés sur la FIGURE 1. Chaque cadre de porte 5 comprend un bord supérieur 6 disposé horizontalement ou sensiblement horizontalement le long d'un toit 7 du véhicule automobile 1. Le bord supérieur 6 du cadre de porte 5 se prolonge verticalement en un bord latéral 8 disposé entre les deux portes latérales 4 du véhicule automobile 1.

Le véhicule automobile 1 comprend en outre un enjoliveur de bord latéral 9 situé le long du bord latéral 8 du cadre de porte 5 et destiné, à des fins esthétiques, à masquer ledit bord latéral 8 du cadre de porte 5. L'enjoliveur de bord latéral 9 est ainsi situé entre les deux portes latérales 4 du véhicule automobile 1. Pour ce faire, l'enjoliveur de bord latéral 9 est fixé solidairement à la coulisse de cadre de porte 3 par l'intermédiaire du dispositif de fixation 2 dudit enjolivent, comme décrit plus en détail ci-après.

La FIGURE 2 illustre le cadre de porte 5 de l'une des portes latérales 4 du véhicule automobile 1, le cadre de porte 5 étant muni de l'enjoliveur de bord latéral 9 et observé depuis l'extérieur du véhicule automobile 1.

La FIGURE 2 illustre le bord supérieur 6 du cadre de porte 5 et le bord latéral 8 du cadre de porte 5 qui logent collectivement la coulisse de cadre de porte 3. Comme visible sur la FIGURE 2, le dispositif de fixation 2 relie la coulisse de cadre de porte 3 à l'enjoliveur de bord latéral 9, le dispositif de fixation 2 étant représenté en pointillés, puisque masqué derrière l'enjoliveur de bord latéral 9 lorsqu'on l'observe depuis l'extérieur du véhicule automobile 1.

Le dispositif de fixation 2 conforme au premier aspect de l'invention comprend une pièce de liaison 10.

L'enjoliveur de bord latéral 9 est solidairement lié à la pièce de liaison 10 du dispositif de fixation 2par l'intermédiaire d'une ouverture de fixation 11 de ladite pièce de liaison 10. L'ouverture de fixation 11 est ménagée dans une face d'appui 12 de la pièce de liaison 10 sur laquelle l'enjoliveur de bord latéral 9 prend appui. L'ouverture de fixation 11 est située du côté d'un face inférieure 13 de la pièce de liaison 10 non recouvert par la coulisse de cadre de porte 3. L'ouverture de fixation 11 est ménagée traverse de part en part la pièce de liaison 1. L'ouverture de fixation 11 a une forme générale trapézoïdale.

La pièce de liaison 10 du dispositif de fixation 2 est solidairement fixée à la coulisse de cadre de porte 3 par l'intermédiaire de moyens de fixation 14. Les moyens de fixation 14 de la coulisse de cadre de porte 3 sont disposés du côté d'une face supérieure 15 de la pièce de liaison 10. La face supérieure 15 de la pièce de liaison 10 est opposé à la face inférieure 13 de la pièce de liaison 10.

Le dispositif de fixation 2 comprend un organe anti-rotation 16. L'organe anti-rotation 16 est logé entre la coulisse de cadre de porte 3 et le cadre de porte 5 lorsque la pièce de liaison 10 est montée sur ladite coulisse de cadre de porte 3. La pièce de liaison 10 est disposée de telle sorte à être située dans une position intermédiaire entre l'enjoliveur de bord latéral 9 et l'organe anti-rotation 16.

Tels que représentés sur la FIGURE 2, la pièce de liaison 10 du dispositif de fixation 2 conforme au premier aspect de l'invention a une forme générale trapézoïdale, sa face supérieure 15 étant plus large que son face inférieure 13. L'ouverture de fixation 11 de l'enjoliveur comprise dans la pièce de liaison 10 est également de forme trapézoïdale. L'organe anti-rotation 16 est quant à lui de forme parallélépipédique et disposé entre l'ouverture de fixation 11 et le face supérieure 15 de la pièce de liaison 10. L'organe anti-rotation 16 et l'ouverture de fixation 11 de l'enjoliveur sont centrés latéralement par rapport à la pièce de liaison 10.

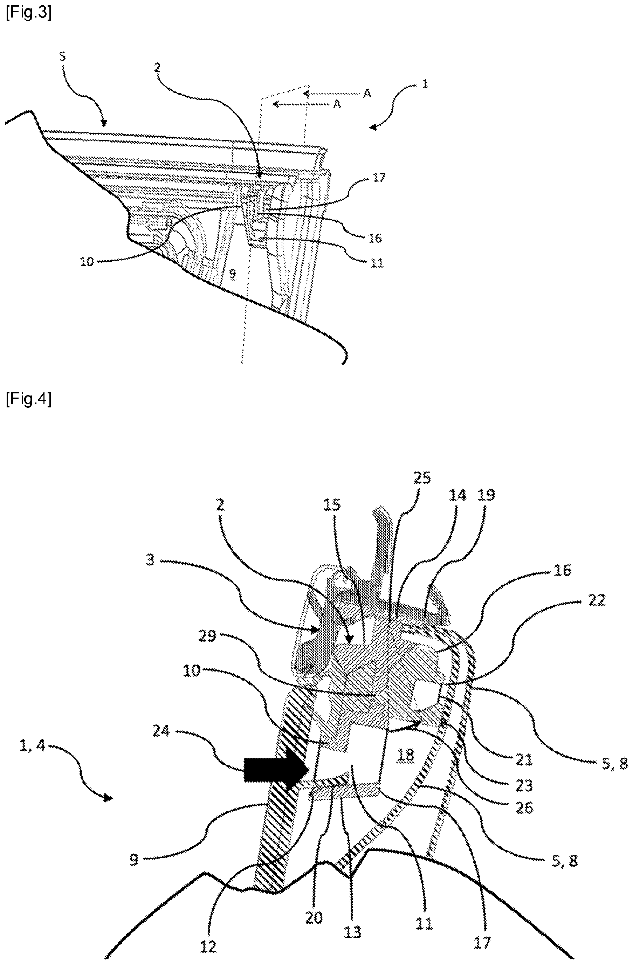

La FIGURE 3 illustre le cadre de porte 5 vu depuis l'intérieur du véhicule automobile 1, de sorte à ce que l'enjoliveur de bord latéral 9 soit à l'arrière-plan par rapport au dispositif de fixation 2 conforme au premier aspect de l'invention.

Le dispositif de fixation 2 est situé à la jonction entre le bord latéral 8 du cadre de porte 5 et le bord supérieur 6 du cadre de porte 5. Dans la FIGURE 3, le cadre de porte 5 n'est pas représenté pour laisser apparent le dispositif de fixation 2.

Dans la FIGURE 3, la pièce de liaison 10 est observée du côté d'une face arrière 17 qui est opposée à la face d'appui 12. La face arrière 17 est destinée à être orientée vers le cadre de porte 5. La pièce de liaison 10 est solidaire de l'organe anti-rotation 16 qui est en saillie de la face arrière 17 de la pièce de liaison 10. La pièce de liaison 10 est traversée par l'ouverture de fixation 11.

La FIGURE 4 illustre, selon une coupe AA longitudinale illustrée en FIGURE 3, l'agencement du dispositif de fixation 2 conforme au premier aspect de l'invention, par rapport au cadre de porte 5. En particulier, la FIGURE 4 illustre la coopération du dispositif de fixation 2 avec la coulisse de cadre de porte 3 d'une part, et avec l'enjoliveur de bord latéral 9 d'autre part. Le dispositif de fixation 2 est logé dans un logement latéral 18 de la porte latérale 4. Le logement latéral 18 est délimité par l'enjoliveur de bord latéral 9, la coulisse de cadre de porte 3 et le bord latéral 8 du cadre de porte 5.

Au niveau de la coupe AA, le bord latéral 8 du cadre de porte 5 prend la forme d'une double tôle participant à la structure de la porte latérale 4 en regard de l'enjoliveur de bord latéral 9. La coulisse de cadre de porte 3 comprend un corps 19 qui s'étend longitudinalement le long du cadre de porte 5 et avec lequel le cadre de porte 5 est rendu solidaire grâce à la pièce de liaison 10.

La pièce de liaison 10 comprend les moyens de fixation 14 par lesquelles la pièce de liaison 10 est rendue solidaire de la coulisse de cadre de porte 3. En l'espèce, les moyens de fixation 14 de la pièce de liaison 10 sont complémentaires du corps 19 de la coulisse de cadre de porte 3 et s'y insèrent.

L'ouverture de fixation 11 traverse la pièce de liaison 10 depuis sa face d'appui 12 jusqu'à sa face arrière 17. En l'espèce, l'ouverture de fixation 11 permet de solidariser la pièce de liaison 10 avec l'enjoliveur de bord latéral 9. A cet effet, l'enjoliveur de bord latéral 9 comprend une languette 20 configurée pour prendre appui contre l'ouverture de fixation 11. Cette configuration avantageuse permet d'une part de stabiliser l'enjoliveur de bord latéral 9 dans sa position d'assemblage, et d'autre part d'aligner les coulisses de cadre de porte 3 et les enjoliveurs de bord latéral 9 situés du même côté du véhicule automobile 1.

L'organe anti-rotation 16 est surmoulé sur la pièce de liaison 10. Comme visible selon la coupe AA de la FIGURE 4, l'organe anti-rotation 16 et la pièce de liaison 10 du dispositif de fixation 2 sont parfaitement imbriqués l'un dans l'autre : l'organe anti-rotation 16 est situé entre le face supérieure 15 de la pièce de liaison 10 et le face inférieure 13 de la pièce de liaison 10 d'une part, et s'étend d'autre part en saillie de la face arrière 17 et de la face d'appui 12 de la pièce de liaison 10, au niveau de la coupe AA.

L'organe anti-rotation 16 comprend une ouverture fonctionnelle 21 centrée latéralement sur l'organe anti-rotation 16. Cette ouverture fonctionnelle 21 facilite le démoulage de l'organe anti-rotation 16, permet également de faire des économies de matière et allège le dispositif de fixation 2.

L'organe anti-rotation 16 du dispositif de fixation 2 s'étend en direction du cadre de porte 5, de sorte qu'il réside un jeu fonctionnel 22 non nul entre l'organe anti-rotation 16 et le cadre de porte 5 lorsque l'enjoliveur de bord latéral 9 n'est pas monté. En l'espèce, l'organe anti-rotation 16 prend en partie appui contre la double tôle du cadre de porte 5 au niveau d'une zone d'appui 23 de l'organe anti-rotation 16, réduisant le jeu fonctionnel 22. La zone d'appui 23 de l'organe anti-rotation 16 est en appui sur le cadre de porte 5 sous l'effet d'une force exercé par la fixation de l'enjoliveur de bord latéral 9 sur le dispositif de fixation 2, cette force étant représenté par une flèche pleine 24. En étant en appui contre le cadre de porte 5, le dispositif de fixation 2 est limité dans son basculement vers l'arrière. En effet, le dispositif de fixation 2 vient rapidement en butée contre le cadre de porte 5 lorsque l'enjoliveur de bord latéral 9 est engagé contre la pièce de liaison 10. Le basculement vers l'arrière s'opère dans un plan de la coupe AA, il est représenté par un arc fléché 26 autour d'un centre 25.

En l'absence de l'organe anti-rotation 16, le dispositif de fixation 2 poursuivrait sa course et arriverait en arrière de la position telle que représentée sur la FIGURE 4, c'est à dire plus proche du cadre de porte 5.

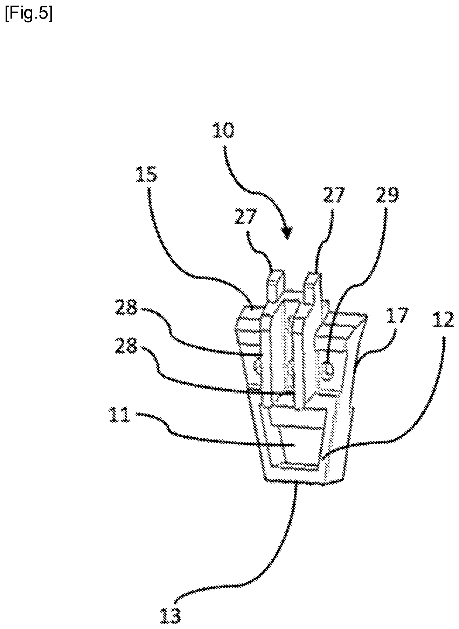

La FIGURE 5 illustre la pièce de liaison 10, isolée par rapport au dispositif de fixation 2. La pièce de liaison 10 est observée du côté de sa face d'appui 12, et on distingue sa face supérieure 15 et sa face inférieure 13.

L'ouverture de fixation 11 est située sur la face d'appui 12 de la pièce de liaison 10. Dans l'exemple de réalisation illustré sur les FIGURES, l'ouverture de fixation 11 a une forme générale trapézoïdale. En outre, l'ouverture de fixation 11 traverse la pièce de liaison 10 depuis la face d'appui 12 jusqu'à la face arrière 17 de ladite pièce de liaison 10. L'ouverture de fixation 11 collabore avec l'enjoliveur de bord latéral 9 afin de permettre sa fixation sur la pièce de liaison 10, notamment par collaboration de formes complémentaires.

La face d'appui 12 de la pièce de liaison 10 comprend en outre deux nervures 28 parallèles entre elles qui s'étendent longitudinalement entre l'ouverture de fixation 11 et la face supérieure 15 de la pièce de liaison 10. Les deux nervures 28 s'étendent en saillie de la face d'appui 12 de la pièce de liaison 10. Chaque nervure 28 se prolonge longitudinalement au-delà de la face supérieure 15 de la pièce de liaison 10, et forme un ergot 27 destiné à collaborer avec l'organe anti-rotation 16 afin de faciliter sa fixation sur ladite pièce de liaison 10.

La pièce de liaison 10 comprend des orifices fonctionnels 29 qui participent à la cohésion entre la pièce de liaison 10 et l'organe anti-rotation 16 lorsque la pièce de liaison 10 et l'organe anti-rotation 16 sont surmoulés. L'un des orifices fonctionnels 29 est également visible sur la FIGURE 4, où il est empli de matière par l'organe anti-rotation 16.

En synthèse, l'invention concerne un dispositif de fixation 2 d'un enjoliveur de bord latéral 9 de cadre de porte 5 d'un véhicule automobile 1. Le dispositif de fixation 2 comprend une pièce de liaison 10 configurée pour assurer la fixation de l'enjoliveur de bord latéral 9 sur une coulisse de cadre de porte 3. Le dispositif de fixation 2 selon l'invention est muni d'un organe anti-rotation 16 fixé solidairement à la pièce de liaison 10 et garantissant la position relative entre l'enjoliveur de bord latéral 9 et la coulisse de cadre de porte 3. L'organe anti-rotation 16 forme ainsi une buttée configurée pour limiter le basculement dudit dispositif de fixation 2 relativement à la coulisse de cadre de porte 3 lors de la fixation de l'enjoliveur de bord latéral 9 sur la pièce de liaison 10.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif de fixation (2) d'un enjoliveur de bord latéral (9) de cadre de porte (5) de véhicule automobile (1), le dispositif de fixation (2) comprenant :
- une pièce de liaison (10) destinée à collaborer avec l'enjoliveur de bord latéral (9), la pièce de liaison (10) comprenant, du côté d'une face d'appui (12) avec l'enjoliveur de bord latéral (9), une ouverture de fixation (11) dudit enjoliveur de bord latéral (9) et des moyens de fixation (14) destinés à permettre la fixation du dispositif de fixation (2) sur une coulisse de cadre de porte (3) ;
- un organe anti-rotation (16) rapporté sur la pièce de liaison (10) pour y être solidarisé et situé au niveau d'une face arrière (17) située à l'opposé de la face d'appui (12), l'organe anti-rotation (16) s'étendant en saillie par rapport à la face arrière (17) de ladite pièce de liaison (10),
**caractérisé en ce que** l'organe anti-rotation (16) est surmoulé sur la pièce de liaison (10).

2. Dispositif de fixation (2) selon la revendication
précédente, dans lequel la pièce de liaison (10) comprend, au niveau de sa face arrière (17), au moins une nervure (28) qui s'étend en saillie par rapport à ladite face arrière (17).

3. Dispositif de fixation (2) selon l'une quelconque des
revendications précédentes, dans lequel l'organe anti-rotation (16) est situé dans une position intermédiaire entre l'ouverture de fixation (11) et une face supérieure de la pièce de liaison (10).

4. Dispositif de fixation (2) selon la revendication
précédente pris en combinaison avec la revendication 2, dans lequel l'au moins une nervure (28) est logée dans l'organe anti-rotation (16) lorsque ledit organe anti-rotation (16) est monté sur la pièce de liaison (10).

5. Dispositif de fixation (2) selon l'une quelconque des
revendications précédentes, dans lequel la pièce de liaison (10) est formée d'un matériau plastique rigide et l'organe anti-rotation (16) est formée d'un élastomère.

6. Coulisse de cadre de porte (3) de véhicule automobile (1), la coulisse de cadre de porte (3) comportant un corps (19) longitudinal configuré pour être monté le long du cadre de porte (5) et un dispositif de fixation (2) selon l'une quelconque des revendications précédentes, le dispositif de fixation (2) étant fixé solidairement sur le corps (19) longitudinal de la coulisse de cadre de porte (3).

7. Coulisse de cadre de porte (3) selon la revendication
précédente, dans laquelle l'organe anti-rotation (16) du dispositif de fixation (2) s'étend en direction du cadre de porte (5), de sorte qu'il réside un jeu fonctionnel (22) non nul entre l'organe anti-rotation (16) et le cadre de porte (5).

8. Véhicule automobile (1) comportant :
- au moins une porte latérale (4) logée dans un cadre de porte (5) ;
- une coulisse de cadre de porte (3) selon l'une quelconque des revendications 6 ou 7 et située le long d'un bord supérieur (6) du cadre de porte (5) ;
- un enjoliveur de bord latéral (9) situé le long d'un bord latéral (8) du cadre de porte (5) et fixé solidairement à la coulisse de cadre de porte (3) par l'intermédiaire de son dispositif de fixation (2). 1

## Patentansprüche

1. Befestigungsvorrichtung (2) für eine Seitenrandkappe (9) eines Türrahmens (5) eines Kraftfahrzeugs (1), wobei die Befestigungsvorrichtung (2) umfasst:
- ein Verbindungsteil (10) zur Zusammenarbeit mit der Seitenrandkappe (9), wobei das Verbindungsteil (10) auf der Seite einer Auflagefläche (12) mit der Seitenrandkappe (9) eine Befestigungsöffnung (11) der Seitenrandkappe (9) und Befestigungsmittel (14) aufweist, um Befestigung der Befestigungsvorrichtung (2) an einer Türrahmenkulisse (3);
- ein an dem Verbindungsstück (10) angebrachtes Drehsicherungselement (16) zur festen Verbindung und an einer der Auflagefläche (12) abgewandten Rückseite (17) angeordnet, wobei das Drehsicherungselement (16) von der Rückseite (17) des Verbindungsstücks (10) vorsteht,
Das Drehsicherungselement (16) ist auf das Verbindungsteil (10) aufgegossen.

2. Befestigungsvorrichtung (2) nach dem vorhergehenden Anspruch, wobei das Verbindungsteil (10) an seiner Rückseite (17) mindestens eine Rippe (28) aufweist, die sich von der Rückseite (17) erstreckt.

3. Befestigungsvorrichtung (2) nach einem der vorhergehenden Ansprüche, bei der das Drehsicherungselement (16) in einer Zwischenposition zwischen der Befestigungsöffnung (11) und einer Oberseite des Verbindungselements (10) angeordnet ist.

4. Befestigungsvorrichtung (2) nach dem vorhergehenden Anspruch in Kombination mit Anspruch 2, wobei die mindestens eine Rippe (28) in dem Antirotationselement (16) aufgenommen ist, wenn das Antirotationselement (16) an dem Verbindungsstück (10) angebracht ist.

5. Befestigungsvorrichtung (2) nach einem der vorhergehenden Ansprüche, bei der das Verbindungsstück (10) aus einem starren Kunststoffmaterial und das Drehsicherungselement (16) aus einem Elastomer gebildet ist.

6. Türrahmenkulisse (3) für ein Kraftfahrzeug (1), wobei die Türrahmenkulisse (3) einen Längskörper (19), der so ausgebildet ist, dass er entlang des Türrahmens (5) montiert werden kann, und eine Befestigungsvorrichtung (2) nach einem der vorhergehenden Ansprüche aufweist, wobei die Befestigungsvorrichtung (2) fest am Längskörper (19) der Türrahmenkulisse befestigt ist (3).

7. Türrahmenkulisse (3) nach dem vorhergehenden Anspruch, bei der sich das Drehsicherungselement (16) der Befestigungsvorrichtung (2) in Richtung des Türrahmens (5) erstreckt, sodass ein nicht-nullter Funktionsspiel (22) zwischen dem Drehsicherungselement (16) und dem Türrahmen (5) liegt.

8. Kraftfahrzeug (1) mit:
- mindestens eine in einem Türrahmen (5) gelagerte Seitentür (4);
- eine Türrahmenkulisse (3) nach einem der Ansprüche 6 oder 7, die entlang einer oberen Kante (6) des Türrahmens (5) angeordnet ist;
- eine Seitenrandkappe (9), die entlang einer Seitenkante (8) des Türrahmens (5) angeordnet ist und über ihre Befestigungseinrichtung (2) fest mit der Türrahmenkulisse (3) verbunden ist.

## Claims

1. Fixing device (2) of a side edge embellishment (9) of door frame (5) of motor vehicle (1), fixing device (2) comprising:
- a connecting part (10) intended to work with the side edge embellishment (9), the connecting part (10) comprising, on the side of a supporting face (12) with the side edge embellishment (9), a fastening opening (11) of the said side edge embellishment (9) and means of fastening (14) intended to enable the attachment of the attachment device (2) on a door frame slide (3);
- an anti-rotation organ (16) reported on the connecting part (10) to be joined and located at the level of a rear face (17) located opposite the supporting face (12), the anti-rotation organ (16) protruding from the rear face (17) of the said connecting part (10),
**characterized in that** the anti-rotation organ (16) is overmolded on the connecting piece (10).

2. Fixing device (2) in accordance with the previous claim, in which the connecting part (10) includes, at the level of its rear face (17), at least one rib (28) which protrudes from the said rear face (17).

3. Fixing device (2) in accordance with any of the preceding claims, in which the anti-rotation device (16) is located in an intermediate position between the fixing opening (11) and a top face of the connecting part (10).

4. Fixing device (2) in accordance with the previous claim taken in conjunction with Claim 2, in which at least one rib (28) is housed in the anti-rotation organ (16) when the said anti-rotation organ (16) is mounted on the connecting piece (10).

5. Fixing device (2) in accordance with any of the preceding claims, in which the connecting part (10) is made of a rigid plastic material and the anti-rotation component (16) is made of an elastomer.

6. Motor vehicle door frame (3) slide (1) means door frame slide (3) with a longitudinal body (19) configured to be mounted along the door frame (5) and a fastening device (2) in accordance with any of the preceding claims, with the fastening device (2) attached solidarily to the longitudinal body (19) of the door frame slide (3).

7. Door frame sliding (3) according to the previous claim, in which the anti-rotation component (16) of the fastening device (2) extends to the door frame (5), so that there is a non-zero functional game (22) between the anti-rotation component (16) and the door frame (5).

8. Motor vehicle (1) incorporating:
- at least one side door (4) housed in a door frame (5);
- a door frame slide (3) according to any claim 6 or 7 and located along a top edge (6) of the door frame (5);
- a side edge embellishment (9) located along a side edge (8) of the door frame (5) and securely attached to the door frame slide (3) through its fastening device (2).
